# EUROPÄISCHE PATENTSCHRIFT

(11) **EP 2 162 633 B1**
(45) Veröffentlichungstag und Bekanntmachung des Hinweises auf die Patenterteilung: **31.10.2012**
(21) Anmeldenummer: 08758611.1
(22) Anmeldetag: 19.05.2008
(51) Int. Cl.: F16F 9/53

(54) **SCHWINGUNGSDÄMPFER**
VIBRATION DAMPER
AMORTISSEUR D'OSCILLATIONS

(30) Priorität: 21.05.2007 DE 102007023817
(43) Veröffentlichungstag der Anmeldung: 17.03.2010
(73) Patentinhaber: Fludicon GmbH, 64293 Darmstadt (DE)
(72) Erfinder: STORK, Michael, 64291 Darmstadt (DE); ROSENFELDT, Horst, 64846 Gross-Zimmern (DE)
(74) Vertreter: Behrens, Helmut
(86) Internationale Anmeldenummer: PCT/EP2008/003993
(87) Internationale Veröffentlichungsnummer: WO 2008/141787

(56) Entgegenhaltungen:
- EP-A- 1 034 383
- EP-A- 1 273 820
- EP-A- 1 437 526
- DE-B3- 10 320 005

## Beschreibung

Die Erfindung betrifft einen Schwingungsdämpfer, insbesondere zur Dämpfung von Ein- oder Ausfederkräften an Kraftfahrzeugen gemäß dem Oberbegriff des Patentanspruchs 1. Ein solcher Dämpfer ist aus der EP1034383 B1 bekannt.

Bei heute üblichen Fahrwerken für Kraftfahrzeuge wird angestrebt, dass sich die Dämpferkräfte für das Aus- bzw. Einfedern im Verhältnis 2:1 bis 4:1 verhalten. Werden dazu geregelte hydraulische oder pneumatische Dämpfer mit Kennfeld eingesetzt, so ist bei einem derartigen Kräfteverhältnis die Regelgüte allerdings begrenzt. Für derartige Regelkreise sind deshalb schnell regelbare Schwingungsdämpfer erforderlich.

Aus der DE 103 20 005 B3 ist ein schnell regelbarer Schwingungsdämpfer mit verstellbarer Dämpfungskraft bekannt, der mit einer magnetorheologischen Flüssigkeit arbeitet. Dieser Schwingungsdämpfer besteht aus einem Zylinder, in dem eine Kolbenstange axial beweglich geführt ist. Dieser Zylinder ist mit einem weiteren Zylindergehäuse umgeben, in dem zwei Drosselstrecken angeordnet sind, die die durch den Kolben getrennten Zylinderkammern miteinander verbinden. In den beiden Zylinderkammern ist eine magnetorheologische Flüssigkeit angeordnet, deren Viskosität im Bereich der Drosselstrecken steuerbar ist. Dazu sind an den Drosselstrecken Feldkrafterzeugungselemente angeordnet, deren elektrische Stromversorgung so gesteuert wird, dass sich die Viskosität der magnetorheologischen Flüssigkeit entsprechend der gewünschten Dämpfung einstellt. Bei einer besonderen Ausführungsart dieses Schwingungsdämpfers sind zwei unabhängig steuerbare Drosselstrecken vorgesehen, die eine Trennung der Dämpfkrafteinstellung in Abhängigkeit der Durchströmrichtung ermöglichen. In beiden Drosselstreckeneinsätzen sind zusätzlich noch nichtsteuerbare Verbindungskanäle vorgesehen, in denen jeweils ein Rückschlagventil zur Trennung der Verbindungskanäle angeordnet ist. Da die beiden Rückschlagventile gegeneinander gerichtet sind und in beiden Drosselstrecken gleichartig ausgebildet sind, ergibt sich in beide Durchströmrichtungen stets die gleiche Durchströmmenge, so dass auch mit einem derartigen Schwingungsdämpfer die Ausregelung unterschiedlicher Dämpferkräfte beim Ein- bzw. Ausfedern eine große Regelspreizung erfordert, wodurch auch hier die Regelgüte begrenzt ist.

Der Erfindung liegt deshalb die Aufgabe zugrunde, einen Schwingungsdämpfer der eingangs genannten Art so zu verbessern, dass damit auf einfache Art unterschiedliche Dämpferkräfte für das Aus- oder Einfedern genau regelbar sind.

Diese Aufgabe wird durch die im Patentanspruch 1 angegebene Erfindung gelöst. Weiterbildung und vorteilhafte Ausführungsbeispiele der Erfindung sind in den Unteransprüchen angegeben.

Die Erfindung hat den Vorteil, dass mit derartigen Schwingungsdämpfern sehr schnell große Unterschiede der Dämpferkräfte beim Aus- und Einfedern gemeinsam ausregelbar sind. Dabei kann durch die Wahl der Spaltanschnittstelle vorteilhafterweise das Verhältnis der Dämpferkräfte verändert werden, ohne die Regelgüte zu beeinträchtigen.

Die Erfindung wird anhand eines Ausführungsbeispiels, das in der Zeichnung dargestellt ist, näher erläutert. Es zeigen:
- Fig.1:: einen elektrorheologischen Schwingungsdämpfer mit einem Drossel- und Bypassspalt im zylindrischen Gehäuse, und
- Fig.2:: einen elektrorheologischen Schwingungsdämpfer mit einem Drossel- und Bypassspalt im Kolben.

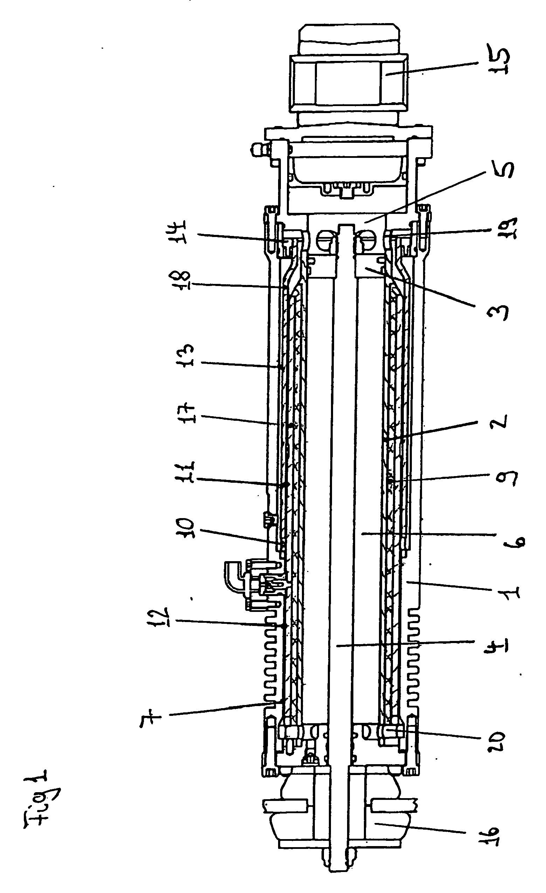

In Fig. 1 der Zeichnung ist ein steuerbarer Schwingungsdämpfer mit elektrorheologischer Flüssigkeit dargestellt, der als Stoßdämpfer für ein Kraftfahrzeug ausgebildet ist. Bei diesem Schwingungsdämpfer ist in einem zylindrischen Gehäuse 1 mit einem Innenrohr 2 ein Kolben 3 mit einer Kolbenstange 4 angeordnet. Dabei bildet das Innenrohr 2 eine Druckmittelkammer, die durch den Kolben 3 in eine Ausfahrkammer 6 und eine Einfahrkammer 5 aufgeteilt wird. Die beiden Druckmittelkammern 5,6 sind durch einen ringsförmigen axialen Drosselspalt 7 im zylindrischen Gehäuse 1 miteinander verbunden. Dabei weist der Drosselspalt 7 zwischen seinen Endbereichen eine Spaltanschnittstelle 10 auf, die den Drosselspalt 7 in einen ersten Drosselspaltabschnitt 11 und einen zweiten Drosselspaltabschnitt 12 aufteilt. An der Spaltanschnittstelle 10 ist zusätzlich noch ein Bypassspalt 13 angeschlossen, der parallel und koaxial zum 1. Drosselspaltabschnitt 11 im zylindrischen Gehäuse 1 angeordnet und mit der Einfahrkammer 5 verbunden ist und ein zu dieser offenes Rückschlagventil 14 enthält.

Der als Stoßdämpfer ausgebildete Schwingungsdämpfer wird vorzugsweise vertikal in einem Kraftfahrzeug eingebaut und enthält an seinem unteren Ende ein erstes Lagerelement 15, das vorzugsweise mit einer Fahrzeugachse verbunden wird. Dabei ist in seinem oberen Ende ein zweites Lagerelement 16 vorgesehen, das fest mit der Kolbenstange 4 verbunden ist und am Fahrzeugchassis befestigt wird. Das zwischen den Lagerelementen 15, 16 angeordnete Gehäuse 1 ist als zylindrisches Außenrohr ausgebildet und umgibt das Innenrohr 2 koaxial in dem der abgedichtete Kolben 3 axial beweglich geführt ist. Dabei stellt der Druckmittelkammerteil aus der die Kolbenstange 4 ausfahrbar ist als Ausfahrkammer eine Ausfederkammer 6 und der Druckmittelkammerteil in die die Kolbenstange 4 einfahrbar ist als Einfahrkammer die Einfederkammer 5 dar, die im Betriebszustand mit einer elektrorheologischen Flüssigkeit gefüllt sind.

Auf der Außenwandung des Innenrohrs 2 ist eine Isolierung 9 angebracht, auf der koaxial zum Innenrohr 2 eine röhrenförmige Elektrode 17 oder mehrere segmentartige Elektrode 17 als Feldkrafterzeugungselemente vorgesehen sind. Dabei ist die Elektrode 17 mit einer Hochspannungsquelle außerhalb des Schwingungsdämpfers verbunden Die Elektrode 17 ist vorzugsweise rohrförmig ausgebildet und umgibt den Drosselspalt 7 auf seiner gesamten axialen Länge und ist koaxial zum Innenrohr 2 angeordnet.

Koaxial zum ersten Drosselspaltabschnitt 11 ist noch ein Zwischenrohr 18 vorgesehen, das sich über eine vorgegebene axiale Länge erstreckt, die an der Spaltanschnittstelle 10 endet. Zwischen dem Zwischenrohr 18 und dem Außenmantel des rohrförmigen Gehäuses 1 ist der Bypassspalt 13 angeordnet, der am Ende des Zwischenrohrs 18 über die Spaltanschnittstelle 10 mit dem innenliegenden Drosselspalt 7 verbunden ist.

Im unteren Teil und an seinem Endbereich ist der erste Drosselspaltabschnitt 11 über eine Einfederbohrung 19 mit der Einfederkammer 5 und der obere zweite Drosselspaltabschnitt 12 mit einer Ausfederbohrung 20 mit der Ausfederkammer 6 verbunden. Im unteren Endbereich des Bypassspaltes 13 ist das Rückschlagventil 14 vorgesehen, das zur Einfederbohrung 19 geöffnet ist und ebenfalls mit der Einfederkammer 5 verbunden ist.

Zur Dämpfung der von einem Fahrzeugrad über die Achse eingeleiteten Fahrschwingungen wird das untere Lagerelement 15 axial gegenüber dem am Fahrzeugchassis befestigten oberen Lagerelement 16 bewegt. Beim Ausfedern bewegt sich das Lagerelement 15 nach unten während das Lagerelement 16 als stillstehend betrachtet werden kann. Dadurch wird auf die obere Kolbenfläche durch die in der Ausfederkammer 6 befindliche elektrorheologische Flüssigkeit als Druckmittel ein Druck ausgeübt, durch die die in der Ausfederkammer 6 befindliche elektrorheologische Flüssigkeit über den zweiten Drosselspaltabschnitt 12 und den ersten Drosselspaltabschnitt 11 in die Einfederkammer 5 strömt. Dabei bewegt sich der Kolben 3 mit seiner Kolbenstange 4 vertikal nach oben in die Ausfederkammer 6. Dabei verhält sich die elektrorheologische Flüssigkeit im unbeeinflussten Zustand wie eine Hydraulikflüssigkeit, so dass ein derartiger Stoßdämpfer ohne Steuerspannung im Grunde wie ein herkömmlicher hydraulischer Stoßdämpfer arbeitet. Die ringförmig angeordneten Rückschlagventile 14 sind dann geschlossen, sodass über den Bypassspalt 13 kein Fluid zurück strömen kann. Dabei bestimmt sich die Dämpfungswirkung im wesentlichen durch Querschnitt und Länge des Drosselspaltes 7 (Spaltlänge 11+12).

Die Dämpfungswirkung eines derartigen Stoßdämpfers kann nun zusätzlich durch die Anlegung einer Steuerspannung an die Elektrode 17 erhöht werden, wodurch sich die Viskosität der elektrorheologischen Flüssigkeit entsprechend verändert. Denn durch die Anlegung einer Steuerspannung wird ein elektrisches Feld erzeugt, durch das die Viskosität der elektrorheologischen Flüssigkeit beliebig erhöht werden kann. Deshalb wird vorzugsweise der Schwingungsdämpfer so gesteuert, dass bei hohen Einfedergeschwindigkeiten entsprechend einer vorgegebenen Einfederkennlinie die Spannung so weit erhöht wird, dass die Radschwingungen gegenüber dem Fahrzeugchassis entsprechend gedämpft werden. Da durch die Einfederschwingung eine Kraft auf das Fahrzeugchassis übertragen wird, entsteht in dessen Folge auch eine Ausfederschwingung die auch entsprechend gedämpft werden soll.

Um die Fahrzeugschwingungen besonders effektiv zu dämpfen, wird derzeit angestrebt, die störenden Ausfederschwingungen mindestens doppelt bis viermal so stark zu dämpfen, um ein Nachschwingen des Chassis zu vermeiden. Dazu hat die Erfindung als Lösung eine Spaltanschnittstelle 10 in dem zylindrischen Gehäuse 1 vorgesehen, an die parallel zum ersten Drosselspaltabschnitt 11 ein Bypassspalt 13 angeordnet wird, der bei der Einfederschwingung den Haupt-Volumenstrom der elektrorheologischen Flüssigkeit wegen des dann geöffneten Rückschlagventils 14 aufnimmt. Hingegen wird dadurch gleichzeitig bei der Ausfederschwingung die Dämpferkraft automatisch vergrößert, da dann das Rückschlagventil 14 geschlossen ist. Dabei ergibt sich das Kräfteverhältnis zwischen der Dämpfung der Einfederkräfte und der Dämpfung der Ausfederkräfte bereits durch die axiale Anordnung der Spaltanschnittstelle 10. Soll nun die Ausfederschwingung doppelt so stark gedämpft werden wie die Einfederschwingung, so ergibt sich je nach den Spaltabmessungen eine Spaltanschnittstelle 10 vorzugsweise etwa in der Mitte der axialen Länge des Stoßdämpfers. Wird nun ein Verhältnis von 4:1 zwischen den Ausfederkräften und den Einfederkräften vorgegebenen, so ist der Spaltwiderstand durch eine Verlängerung des Bypassspaltes 13 und eine Verkürzung des 2. Drosselspaltabschnittes 12 entsprechend zu erhöhen. Durch die Anordnung der Spaltanschnittstelle 10 sowie die Ausbildung der Drosselspaltabschnitte 11,12, als auch des Bypassspaltes 13 kann deshalb auf einfache Weise das Verhältnis der Ausfederkräfte zu den Einfederkräften beliebig verändert werden und dies ohne zusätzliche Regelung der Viskosität der elektrorheologischen Flüssigkeit.

Bei dem vorgesehene Ausführungsbeispiel ist somit durch eine einheitliche Spannungsregelung an den beiden Drosselspalten 11, 12 eine schwingungsabhängige Dämpfung möglich, wobei automatisch die Ausfederschwingung stärker gedämpft wird als die Einfederschwingung. Dadurch bleibt über dem gesamten Regelbereich die Regelgüte unverändert. Darüber hinaus wird das fail-safe-Verhalten insofern verbessert, als bei Spannungsausfall das Verhältnis der Basis-Dämpferkräfte für für Ein-und Ausfedern gleich bleibt. Bei einer anderen Ausbildung des Schwingungsdämpfers kann bei einer zweiteiligen Elektrode 17 auch der erste Drosselspaltabschnitt 11 anders gesteuert werden als der zweite Drosselspaltabschnitt 12. Dadurch kann auch während der Fahrt zusätzlich noch das Verhältnis der Ausfederkräfte gegenüber den Einfederkräften verändert werden. Hierdurch sind insbesondere noch Feinanpassungen möglich, die durch die vorgegebene mechanische Anordnung der Spaltanschnittstelle nicht berücksichtigt wurden. Die Erfindung ist gleichfalls auch mit einer magnetorheologischen Flüssigkeit und einer entsprechenden magnetischen Feldkrafterzeugung möglich.

Des weiteren können innerhalb des zylindrischen Gehäuses 1 innerhalb verschiedener Radialsektoren auch mehrere Anschnittstellen 10 vorgesehen werden, von denen mehrere separate Bypassspalte 13 axial abgehen in denen jeweils Rückschlagventile 14 angeordnet sind. Die Rückschlagventile können auch als separat gesteuerte elektromagnetische- oder elektrorheologische Ventile ausgebildet sein. Die Rückschlagventile 14 können aber auch als einstellbare Überströmventile ausgebildet werden.

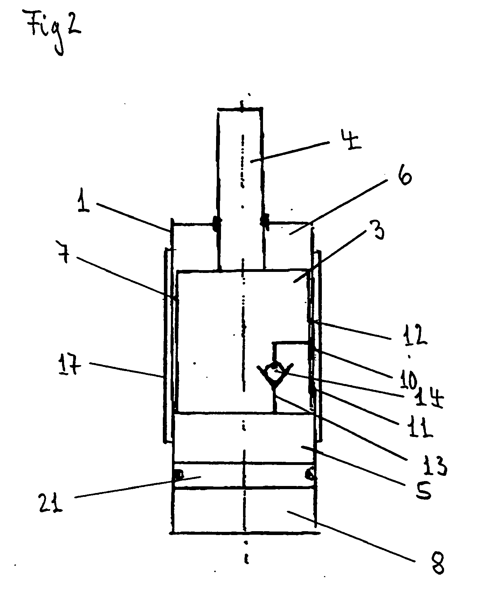

In Fig. 2 der Zeichnung ist ein alternatives Ausführungsbeispiel schematisch dargestellt, bei dem die die Druckmittelkammern 5,6 verbindenden Drosselspaltabschnitte 11,12 mit dem Bypassspalt 13 und der Anschnittstelle 10 im oder am Kolben 3 angeordnet sind. Dabei entsprechen die Bezugszeichen in Fig. 2 der Zeichnung den funktionsgleichen Bezugszeichen der Fig. 1. Der Schwingungsdämpfer nach Fig. 2 enthält ebenfalls ein zylinderförmiges Gehäuse 1 als Druckmittelkammer in dem ein Kolben 3 axial beweglich geführt ist, der die Druckmittelkammer in eine Ausfahrkammer 6 und eine Einfahrkammer 5 unterteilt. Der Kolben 3 ist in seiner axialen Erstreckung länger ausgeführt als der in Fig. 1 der Zeichnung, weil in oder an diesem Kolben 3 die funktionswesentlichen Steuerteile mit dem Drosselspaltabschnitten 11,12 und dem Bypassspalt 13 vorgesehen sind. Dazu ist auf der äußeren Mantelfläche des Kolbens 3 ein axialer Drosselspalt 7 angeordnet, der sowohl zur Ausfahrkammer 6 als auch zur Einfahrkammer 5 offen ist und diese miteinander verbindet. Dieser ist vorzugsweise ringförmig um die äußere Mantelfläche des Kolbens 3 angeordnet.

Bei einem vorgesehenen Dämpfungsverhältnis von 2:1 zwischen der Ausfederdämpfung zur Einfederdämpfung ist etwa in der axialen Mitte des Kolbens 3 zwischen einem ersten Drosselspaltabschnitt 11 und einem zweiten Drosselspaltabschnitt 12 eine Spaltanschnittstelle 10 vorgesehen, vom der gleichzeitig ein Bypassspalt 13 zur Einfahrkammer 5 abzweigt. Diese Spaltabschnittstelle 10 kann vorzugsweise als flache Ringbohrung ausgebildet sein, die zwischen allen Spaltabschnitten 11,12,13 eine Verbindung herstellt. Gleichfalls ist es auch möglich, dass von der Spaltanschnittstelle 10 mehrere Bypassspalte 13 an der Kolbenaußenwand oder innerhalb des Kolbens 3 geführt werden. Am Umfang des Kolbens 3 in verschiedenen radialen Abschnitten können auch mehrere Spaltanschnittstellen 10 vorgesehen werden, die aber alle miteinander verbunden sein müssen. Dabei kann von jeder einzelnen separaten Spaltanschnittstelle 10 ein separater Bypassspalt 13 zur Einfahrkammer 5 geführt werden, der über ein separates Rückschlagventil 14 verfügt, das zur Einfahrkammer 5 hin offen oder zumindest offen schaltbar sein muss.

Im vorgesehenen Ausführungsbeispiel ist im Bypassspalt 13 zwischen der Spaltanschnittstelle 10 und der Kolbenunterseite zur Einfahrkammer 5 ein zu dieser offenes Rückschlagventil 14 vorgesehen. Ein derartiges zur Einfahrkammer 5 offenes Rückschlagventil 14 kann auch als einstellbares Überströmventil ausgebildet sein. Parallel und koaxial zu den Drosselspaltabschnitten 11,12, ist isoliert in der inneren Zylindermantelfläche oder auf der äußeren Zylindermantelfläche des Gehäuses 1 eine Elektrode 17 als Feldkrafterzeugungselement angeordnet, die sich über den gesamten Kolbenhubabschnitt erstreckt. Alternativ kann auch die Kolbenoberfläche als Plus-Elektrode und die Zylinderfläche als Masse-Pol ausgebildet sein. Als Druckmittel befindet sich in den beiden Druckmittelkammern 5,6 eine elektrorheologische Flüssigkeit, durch die die auftretenden Schwingungen gesteuert dämpfbar sind.

Ein derartiger Schwingungsdämpfer kann auch mit magnetorheologischen Flüssigkeiten ausgeführt werden, wenn statt der ein elektrischen Feld erzeugenden Elektrode 17 als Krafterzeugungselement eine Stromspule zur Magnetfelderzeugung vorgesehen wird. Zum Volumenausgleich für die längs verschiebbare Kolbenstange 4 ist zusätzlich noch eine Speicherkammer 8 mit einem komprimierbaren Gas vorgesehen, die durch einen abgedichteten stangenlosen Kolben 21 von der Einfahrkammer 5 getrennt ist.

Der Schwingungsdämpfer nach Fig. 2 der Zeichnung kann ebenfalls als steuerbarer Stoßdämpfer als auch für andere gesteuerte Schwingungsdämpfungen eingesetzt werden. Die Drosselspaltabschnitte 11,12 müssen sich nicht koaxial axial zur oder auf der Kolbenmantelfläche erstrecken, sondern können auch als lineare oder schraubenförmige Kanäle oder in anderen spaltartigen Mustern geführt werden, wobei es lediglich auf deren steuerbaren Durchflusswiderstand gegenüber den Schwingungskräften ankommt.

Bei einer weiteren Ausführungsform könnten die Drosselspaltabschnitte 11,12 auch auf der inneren Mantelfläche des Druckmittelzylinders im Gehäuse 1 nach innen offen geführt werden, wobei sichergestellt sein muss, dass die Spaltanschnittstelle 10 immer von der Kolbenmantelfläche abgedeckt bleibt. Dies ist allerdings nur bei langgestreckten Kolbenausführungen mit geringen Schwingungshüben denkbar. Dadurch würde sich gleichzeitig mit der Kolbenbewegung auch das Verhältnis der Ausfederdämpfung zur Einfederdämpfung verändern lassen. Für eine derartige Ausführung muss der Bypassspalt 13 mit dem Rückschlagventil 14 aber innerhalb der Gehäusewand geschlossen geführt werden, so dass sich das Verhältnis der Ausfederdämpfung zur Einfederdämpfung nur bei größerem Kolbenhub nennenswert ändert.

## Patentansprüche

1. Schwingungsdämpfer, insbesondere zur Dämpfung von Ein- oder Ausfederkräften an Kraftfahrzeugen, der einen Druckmittelzylinder (2) enthält, in dem ein Kolben (3) mit einer Kolbenstange (3) axial verschiebbar angeordnet ist, der den Druckmittelzylinder (2) in eine Ein- (5) und eine Ausfahrkammer (6) unterteilt, in denen als Druckmittel eine rheologische Flüssigkeit enthalten ist,
- wobei die Ein- (5) und Ausfahrkammer (6) mindestens durch einen Drosselspalt (7) miteinander verbunden sind, in dessen Bereich mindestens ein Feldkrafterzeugungselement (17) angeordnet ist,
- wobei der Drosselspalt (7) durch eine Spaltanschnittstelle (10) in einen ersten und einen zweiten Drosselspaltabschnitt (11, 12) unterteilt ist,
- wobei der erste Drosselspaltabschnitt (11) mit der Einfahrkammer (5) und der zweite Drosselspaltabschnitt (12) mit der Ausfahrkammer (6) verbunden ist,
- wobei mindestens ein Bypassspalt (13) mit der Spaltanschnittstelle (10) und mit der Einfahrkammer (5) verbunden ist und
- wobei der Bypassspalt (13) ein einseitig zur Einfahrkammer (5) offenes Rückschlagventil (14) aufweist,
**dadurch gekennzeichnet,**
**dass** elektro-rheologische Flüssigkeit als Druckmittel eingesetzt ist,
**dass** der Durchfluss der elektro-rheologischen Flüssigkeit sowohl im ersten (11) als auch im zweiten Drosselspaltabschnitt (12) über das mindestens eine Feldkrafterzeugungselement (17) gesteuert wird
und
**dass** die Grunddämpfungseigenschaft durch die Lage der Spaltanschnittstelle (10) und die Feinabstimmung der Dämpfungseigenschaften durch das mindestens eine Feldkrafterzeugungselement (17) erfolgt.

2. Schwingungsdämpfer nach Anspruch 1, **dadurch gekennzeichnet, dass** der Drosselspalt (7) mit den beiden Drosselspaltabschnitten (11,12) sowie der Bypassspalt (13) mit dem Rückschlagventil (14) innerhalb des zylindrischen Gehäuses (1) als umschlossene Spalte ausgeführt sind.

3. Schwingungsdämpfer nach Anspruch 1, **dadurch gekennzeichnet, dass** der Drosselspalt (7) mit den beiden Drosselspaltabschnitten (11,12) sowie dem Bypassspalt (13) mit dem Rückschlagventil (14) im Kolben (3) oder an der äußeren Kolbenmantelfläche vorgesehen sind.

4. Schwingungsdämpfer nach einem der vorhergehenden Ansprüche, **dadurch gekennzeichnet, dass** die Rückschlagventile (14) als separat gesteuerte elektromagnetische oder als elektro-rheologische Ventile ausgebildet sind.

5. Schwingungsdämpfer nach einem der vorhergehenden Ansprüche 1 bis 3, **dadurch gekennzeichnet, dass** das Rückschlagventil (14) als einstellbares Überströmventil ausgebildet ist.

6. Schwingungsdämpfer nach einem der vorhergehenden Ansprüche, **dadurch gekennzeichnet, dass** zwei separat geregelte Feldkrafterzeugungsteilelemente (17) vorgesehen sind, die jeweils in den beiden Drosselspaltabschnitten (11,12) angeordnet sind.

7. Schwingungsdämpfer nach einem der vorhergehenden Ansprüche, **dadurch gekennzeichnet, dass** mehrere Spaltanschnittstellen (10) vorgesehen sind, die in verschiedene Radialsektoren angeordnet sind und mit unterschiedlich ansteuerbaren Rückschlagventilen (14) verbunden sind.

## Claims

1. Vibration damper, in particular for damping resilient compression or decompression forces on motor vehicles, which contains a pressure medium cylinder (2), in which a piston (3) with a piston rod (3) is axially displaceably arranged, which divides the pressure medium cylinder (2) into a retraction chamber (5) and an extension chamber (6), in which chambers a rheological fluid is contained as a pressure medium,
- wherein the retraction chamber (5) and extension chamber (6) are connected to one another at least by a throttle gap (7), in the region of which at least one field force generating element (17) is arranged,
- wherein the throttle gap (7) is divided by a gap interface point (10) into a first and a second throttle gap section (11, 12),
- wherein the first throttle gap section (11) is connected to the retraction chamber (5) and the second throttle gap section (12) is connected to the extension chamber (6),
- wherein at least one bypass gap (13) is connected to the gap interface point (10) and to the retraction chamber (5) and
- wherein the bypass gap (13) has a check valve (14) which is open on one side toward the retraction chamber (5),
**characterised in that**,
electro-rheological fluid is used as the pressure medium,
**in that** the through-flow of the electric-rheological fluid is controlled both in the first (11) and in the second throttle gap section (12) by the at least one field force generating element (17) and
**in that** the basic damping characteristic is due to the position of the gap interface point (10) and the fine tuning of the damping characteristics is due to the at least one field force generating element (17).

2. Vibration damper according to claim 1, **characterised in that** the throttle gap (7) with the two throttle gap sections (11, 12) and the bypass gap (13) with the check valve (14) are configured as enclosed gaps within the cylindrical housing (1).

3. Vibration damper according to claim 1, **characterised in that** the throttle gap (7) with the two throttle gap sections (11, 12) and the bypass gap (13) with the check valve (14) are provided in the piston (3) or on the outer piston side surface.

4. Vibration damper according to any one of the preceding claims **characterised in that** the check valves (14) are configured as separately controlled electromagnetic valves or as electro-rheological valves.

5. Vibration damper according to any one of the preceding claims 1 to 3, **characterised in that** the check valve (14) is configured as an adjustable discharge valve.

6. Vibration damper according to any one of the preceding claims, **characterised in that** two separately controlled field force generating part elements (17) are provided, which are respectively arranged in the two throttle gap sections (11, 12).

7. Vibration damper according to any one of the preceding claims, **characterised in that** a plurality of gap intersection points (10) are provided, which are arranged in various radial sectors and are connected to differently controllable check valves (14).

## Revendications

1. Amortisseur de vibration, en particulier pour l'amortissement de forces de compression et de débattement de ressort sur des véhicules automobiles, qui contient un cylindre pour agent de pression (2), dans lequel un piston (3) est disposé de façon coulissant axialement avec une tige de piston (3), lequel piston subdivise le cylindre d'agent de pression (2) en une chambre d'entrée (5) et une chambre de sortie (6), dans lesquelles un liquide rhéologique est contenu comme agent de pression,
- la chambre d'entrée (5) et la chambre de sortie (6) étant reliées l'une avec l'autre au moins par une fente d'étranglement (7), dans la zone de laquelle au moins un élément de génération de force de champ (17) est disposé,
- la fente d'étranglement (7) étant subdivisée par un point d'attaque de fente (10) en une première partie de fente d'étranglement et une seconde partie de fente d'étranglement (11, 12),
- la première partie de fente d'étranglement (11) étant reliée avec la chambre d'entrée (5) et la seconde partie de fente d'étranglement (12) avec la chambre de sortie (6),
au moins une fente de dérivation (13) étant reliée avec le point d'attaque de fente (10) et avec la chambre d'entrée (5) et
- la fente de dérivation (13) présentant un clapet anti-retour (14) ouvert sur un côté de la chambre d'entrée (5),
**caractérisé**
**en ce que** du liquide électro-rhéologique est utilisé comme agent de pression,
**en ce que** l'écoulement du liquide électro-rhéologique est commandé aussi bien dans la première partie de fente d'étranglement (11) que dans la seconde partie de fente d'étranglement (12) par le biais du au moins un élément de production de force de champ (17)
et
**en ce que** la propriété d'amortissement de base s'effectue par la position du point d'attaque de fente (10) et l'ajustement fin de propriétés d'amortissement par le au moins un élément de production de force de champ (17).

2. Amortisseur de vibration selon la revendication 1, **caractérisé en ce que** la fente d'étranglement (7) est réalisée avec les deux parties de fente d'étranglement (11, 12) et la fente de dérivation (13) avec le clapet anti-retour (14) à l'intérieur du boîtier (1) cylindrique sous forme de fentes enfermées.

3. Amortisseur de vibration selon la revendication 1, **caractérisé en ce que** la fente d'étranglement (7) avec les deux parties de fente d'étranglement (11, 12) et la fente de dérivation (13) avec le clapet anti-retour (14) sont prévues dans le piston (3) ou sur la surface d'enveloppe extérieure du piston.

4. Amortisseur de vibration selon l'une des revendications précédentes, **caractérisé en ce que** les clapets anti-retour (14) sont prévus sous forme de vannes électromagnétiques commandées séparément ou sous forme de vannes électro-rhéologiques.

5. Amortisseur de vibration selon l'une des revendications précédentes 1 à 3, **caractérisé en ce que** le clapet anti-retour (14) est conçu comme une vanne de trop-plein réglable.

6. Amortisseur de vibration selon l'une des revendications précédentes, **caractérisé en ce que** deux éléments partiels de production de force de champ (17) réglés séparément sont prévus, lesquels sont disposés respectivement dans les deux parties de fente d'étranglement (11, 12).

7. Amortisseur de vibration selon l'une des revendications précédentes, **caractérisé en ce que** plusieurs points d'attaque de fente (10) sont prévus, qui sont disposés dans différents secteurs radiaux et sont reliés avec des clapets anti-retour (14) pouvant être activés différemment.
